# EUROPEAN PATENT APPLICATION

(11) **EP 1 381 177 A2**
(43) Date of publication of application: **14.01.2004**
(21) Application number: 03254282.1
(22) Date of filing: 03.07.2003
(51) Int. Cl.: H04H 1/00

(54) **Broadcast reception system and apparatus**

(30) Priority: 04.07.2002 JP 2002195486
(71) Applicant: Matsushita Electric Industrial Co., Ltd., Kadoma-shi, Osaka-fu 571-8501 (JP)
(72) Inventor: Ishioka, Toshiyuki, Takatsuki-shi, Osaka-fu 569-1029 (JP); Sekibe, Tsutomu, Hirakata-shi, Osaka-fu 573-0045 (JP)
(74) Representative: Crawford, Andrew Birkby

(57) **Abstract**

To precisely adjust a playback reference time counter in a host device by transmitting a time adjustment signal included in a broadcast signal from a broadcast reception apparatus to the host device so that transmission delay inequalities do not occur in a broadcast receive/play system constituted by the host device, which is a portable information terminal or the like that functions to playback stream data based on the MPEG-2 system standard or the like, and the broadcast reception apparatus, which has a card configuration or the like, is mountable in a card slot or the like of the host device, and operates when mounted in and having power supplied from the host device, the broadcast reception apparatus conducts transmission/reception of reception control commands, response data and so forth with the host device via a connection terminal in a first group in sync with a clock signal from the host device, and also, in sync with a clock signal generated within the broadcast reception apparatus, extracts stream data from the broadcast signal and transmits the clock signal and the extracted stream data to the host device via a connection terminal in a second group.

## Description

### BACKGROUND OF THE INVENTION

### 1. Field of the Invention

The present invention relates to digital broadcast receive/play technology, and in particular to a digital broadcast receive/play system formed by mounting a broadcast reception apparatus that receives broadcast waves in a playback device that plays digital streams.

### 2. Related Art

In recent years, a multitude of different compact electronic devices have been developed and are rapidly becoming popular, in the backdrop of advances and the like in the miniaturization technology of integrated circuits. Such compact electronic devices include, for example, portable information terminals (e.g. personal digital assistants or simply "PDAs"), mobile telephones, digital cameras and notebook computers. Moreover, there are mobile telephones available that are capable of video stream playback and the like.

There are also compact electronic devices that, in order to increase memory or extend functions, include a slot (e.g. personal computer card slot, secure device card slot, etc.) for interchangeably mounting various types of card apparatuses such as so-called memory cards, input/output (IO) cards and so forth.

Here, a personal computer (PC) card slot is a slot capable of mounting arbitrary PC cards having a memory or IO function conforming to PC card standards laid down by the Personal Computer Memory Card International Association (PCMCIA) and the like. A secure device (SD) card slot is a slot capable of mounting SD cards conforming to SD standards and widely used as the memory apparatuses of digital cameras and the like, or SDIO (secure device input/output) cards conforming to SDIO standards, which extend the SD standards and make possible the development of various IO apparatuses. Technology relating to IO apparatuses mountable in compact electronic devices is disclosed, for example, in unexamined Japanese patent application publication no.2001-307025.

Furthermore, in the backdrop of advances in information communications technology in recent years, the utility of digital broadcasts has been improved, and there are also countries implementing satellite digital broadcasts and ground wave digital broadcasts.

In Japan, for example, satellite digital broadcasts are already being implemented, ground wave digital broadcasts are scheduled to commence at the end of 2003, and broadcasts targeting mobile telephones and the like out of the above-mentioned compact electronic devices are being planned.

The following description relates to control of the playback timing of broadcast programs in a conventional broadcast receive/play apparatus.

A general prior art broadcast apparatus for digital television broadcasts changes video streams formed from MPEG (Moving Picture Experts Group) encoded video data forming a program content, audio streams formed from encoded audio data, and the like into transport stream (TS) format by time division multiplexing the streams based on the MPEG-2 system standard (ISO/IEC 13818-1), and digitally modulates and outputs the transport streams as broadcast waves.

So that video and audio streams are correctly played in synchronization (hereafter simply "in sync") on the side of the broadcast receive/play apparatus that receives the digital broadcast according to a time set on the broadcast side, information such as a DTS (decoding time stamp), a PTS (presentation time stamp) and a PCR (program clock reference) is included in a TS.

Here, the DTS and PTS are time stamps showing the time at which decode/playback should be conducted in relation to each grouping unit within a video stream or an audio stream, and have a precision of 90 kHz.

Furthermore, the PCR is clock information for correcting the value of an STC (system time clock) to match a value set on the broadcast side, the STC being a clock that shows a time reference of decoding by an MPEG decoder, and the STC value being measured within the broadcast receive/play apparatus by a 27 MHz clock. The broadcast side broadcasts a TS after multiplexing values measured in the same way by a 27 MHz clock onto the TS as PCRs at intervals of 0.1 milliseconds or less. Moreover, the MPEG-2 system standard states that a decoder should have a PLL (phase locked loop) function in order to obtain an STC having the same waveform as the system clock on the broadcast side (i.e. encoder side) shown by the PCRs.

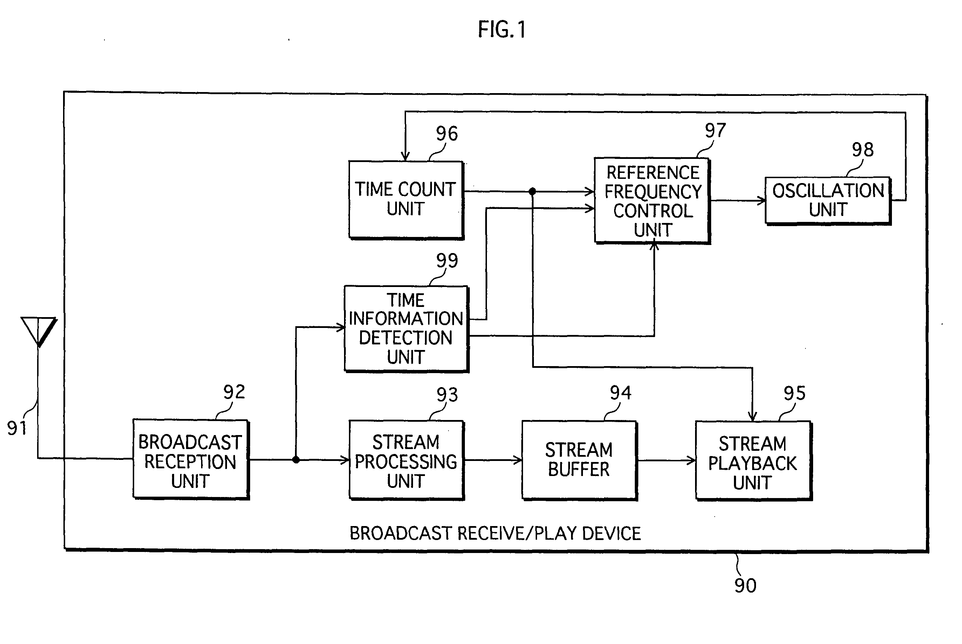

Fig. 1 shows a functional structure of a conventional broadcast receive/play apparatus.

Broadcast receive/play apparatus 90 is structured from an antenna 91, a broadcast reception unit 92, a stream processing unit 93, which is a so-called TS decoder, a time information detection unit 99, a time count unit 96, which is an STC counter, a reference frequency control unit 97, an oscillator 98, a stream buffer 94, and a stream playback unit 95.

Broadcast reception unit 92 has a tuner and a demodulator, and functions to demodulate digitally modulated broadcast streams received from the antenna and tuned by the tuner, and to output transport streams obtained as a result of the demodulation to stream processing unit 93 and time information detection unit 99.

Stream processing unit 93 conducts header analysis of each of the TS packets structuring an inputted TS, integrates the plurality of TS packets into a PES (packetized elementary stream), and temporarily stores packetized video and audio elementary streams in stream buffer 94, which is a memory area.

Stream buffer 94 transmits packetized video and audio elementary streams to stream playback unit 95 in response to a request from the stream playback unit.

Stream playback unit 95 decodes and plays inputted PESs of video and audio streams at a timing at which a DTS or PTS appended to a PES header match an STC received from time count unit 96.

Time count unit 96 is a counter for counting an STC, which is a reference time, and functions to conduct counting up in sync with a clock generated by oscillator (VCO: voltage control oscillator) 98 and having a frequency whose reference is 27 MHz, and to transmit the STC, being a count value, to reference frequency control unit 97 and stream playback unit 95.

Time information detection unit 99 detects PCRs within a TS, and conveys PCR values and the detection timing of PCRs to reference frequency control unit 97. The timing detected for the end byte of a PCR, which is data of a plurality of bytes, is the detection time of the PCR. Moreover, although disparities between the PCR transmission timing on the broadcast side and the detection timing of PCRs in time information detection unit 99 arise due to transmission delays in the broadcast route and the route from reception to detection, it is expected that these disparities will basically be the same to a certain degree at each instant in time.

Reference frequency control unit 97 receives input of a PCR value detected by time information detection unit 99 and an STC from time count unit 96, and outputs, as a control voltage to oscillator 98 at the PCR detection timing conveyed from time information detection unit 99, a signal obtained by applying a low-pass filter after calculating and digital-to-analog (D/A) converting the difference between the PCR and STC. As a result of this control of oscillator 98, an STC that perfectly matches the system clock on the broadcast side (i.e. encoder side) is transferred from time count unit 96 to stream playback unit 95, and video and audio stream playback at timings set by the broadcast side is thus realized.

If broadcast receive/play apparatus 90 does not detect PCRs in a TS and carry out setting and correcting of an STC using the detected PCRs, the STC being ahead of or behind the system clock on the broadcast side (i.e. encoder side) means either that data will not have completely arrived by the decoding and playback timing or there will be memory overflow due to decoding and playback processing delays, resulting in repetitions or drop frames.

However, the following problem is incurred when, in order to be able to receive and playback digital broadcasts using a compact electronic device such the above-mentioned mobile telephones and so forth, a configuration is adopted in which a compact electronic device (hereafter "host device") is charged with the playback function and a compact attachment apparatus (hereafter "IO card") such as an SDIO card or PC card mountable in the host device is charged with the broadcast receiving function.

When conducting transmission/reception of data with a host device, conventional IO cards conforming to PC card standards or SDIO standards receive clock signals from the host device and conduct transmission/reception of data changed into a regular format, in sync with the clock signals.

Simply by having an IO card charged with the broadcast reception function change a TS extracted from a broadcast signal into a regular format and intermittently transfer the changed TS to a host device charged with the playback function using the same method as these conventional IO cards, it is not possible, on the playback device side, to use PCRs in the TS to accurately adjust an STC for adjusting playback timing. That is, if transport streams which include PCRs are changed to a regular format and transferred intermittently from an IO card, it is not possible to adjust an STC with any great precision so as to be as intended by the broadcast side, because the disparity between the PCR reception timing and the PCR detection timing on the playback device side can vary greatly from instant to instant.

### SUMMARY OF THE INVENTION

In view of the above issue, an object of the present invention is to provide a broadcast receive/play system formed from a host device having a playback function, a broadcast reception apparatus (i.e. an IO card having a broadcast reception function) mountable in the host device, and capable of adjusting an STC forming a reference time of decoding and playback with a certain degree of high precision, and to provide the broadcast reception apparatus.

In order to achieve the above object, the present invention is a broadcast reception apparatus that is mountable in a device and operates when mounted in and having power supplied by the device, and that includes: a transmission terminal; a clock generation unit operable to generate a transmission reference clock signal having a predetermined frequency; and a receive/transmit unit operable to continuously receive a broadcast signal containing stream data that includes information for playback time adjustment, and, in synchronization with the transmission reference clock signal, to extract from the broadcast signal and transmit to the device via the transmission terminal, the stream data.

According to this structure, since stream data extracted from a broadcast signal is transmitted from a broadcast reception apparatus set in a host device to the host device in sync with a clock signal having a constant frequency, it is possible, when information for time control, whose reception timing is also a necessary requisite, is included in the stream data, to detect the information for time control precisely on the host device side. Consequently, the host device is able to precisely adjust a clock within the host device that forms, for example, a reference specifying a playback time of the stream data.

Here, the broadcast reception apparatus may further include a clock output terminal, and the clock generation unit may transmit the generated transmission reference clock signal to the device via the clock output terminal.

According to this structure, since the host device receiving stream data transmitted from the broadcast reception apparatus is able to accurately specify the reception timing of the stream data using a transmission reference clock signal, it is possible to appropriately detect data in the stream data, such as PCRs and the like, whose reception timing accuracy is important.

Also, the broadcast reception apparatus may further include one or a plurality of communication terminals, and a communication unit operable to sequentially receive, from the device via one or more of the communication terminals, one or more pieces of control data that includes control data relating to a broadcast signal selection, and to transmit response data that responds to the received control data to the device via one or more of the communication terminals. Furthermore, the broadcast signal received by the receive/transmit unit may be selected according to one of the pieces of control data received by the communication unit.

According to this structure, because the broadcast reception apparatus further transmits, in sync with a clock having a predetermined frequency, stream data obtained by broadcast reception unidirectionally to the host device, while having a typical mutual interface for receiving control data and commands and the like from the host device specifying reception frequencies and so forth, and for returning response data and the like from the broadcast reception apparatus in response to these commands, it is possible to realize a broadcast reception apparatus that has the effect of transmitting, to a host device and without delay variations, stream data obtained from a broadcast, while, for example, conforming to general standards for PC cards, SDIO cards and so forth to a certain extent.

Also, the broadcast reception apparatus may further include a control clock reception terminal, and the communication unit may receive a control clock signal continuously from the device via the control clock reception terminal, and conduct the reception of control data and the transmission of response data in synchronization with the control clock signal.

According to this structure, because the broadcast reception apparatus, in addition to having an interface for conducting transmission/reception of data with the host device in sync with a clock signal from the host device as is typical of ancillary apparatuses which operate when mounted in a host device, transmits, in sync with an independent clock having a constant frequency, stream data obtained from a broadcast, it is possible for the host device to play broadcasted stream data at an appropriate time scheduled on the broadcast side, by using information for time adjustment included in stream data, when the broadcast reception apparatus is mounted in the host device in place of other ancillary apparatuses.

Also, the receive/transmit unit may receive the broadcast signal via an antenna, the stream data may be a transport stream, and the information for playback time adjustment may be a program clock reference.

According to this structure, the broadcast reception apparatus is able to receive general digital broadcasts transmitted in conformity with the MPEG-2 system standard, and to have the host device decode and play the video and audio data of the broadcast content at appropriate times.

Also, the broadcast reception apparatus may further include an interrupt signal notification terminal, and an interrupt notification unit operable to detect an occurrence of a predetermined interrupt cause, and, when the occurrence is detected, to notify an interrupt signal to the device via the interrupt signal notification terminal.

According to this structure, because the broadcast reception apparatus, as an ancillary apparatus mountable in the host device, has a transmission route for notifying the host device of interrupt signals, in addition to a transmission route for transmitting broadcasted stream data to the host device, it is possible for the host device to detect, for example, the occurrence of errors in the broadcast reception apparatus, by receiving interrupt signals.

Also, the broadcast reception apparatus may have a configuration enabling the broadcast reception apparatus to be mounted in a PC card slot that is included in the device and conforms to a PC card standard.

According to this structure, by mounting this broadcast reception apparatus, it is possible to have a host device that has a PC card slot and a stream data playback function, play broadcasted video and audio at appropriate times.

Also, the broadcast reception apparatus may have a configuration enabling the broadcast reception apparatus to be mounted in an SD card slot that is included in the device and conforms to an SDIO standard.

According to this structure, by mounting this broadcast reception apparatus, it is possible to have a host device that has a SD card slot and a stream data playback function, play broadcasted video and audio at appropriate times.

A broadcast receive/play system relating to the present invention includes a broadcast reception apparatus that receives a broadcast signal containing stream data which includes playback reference clock adjustment information and playback time specification information, and a playback device that acquires stream data from the broadcast reception apparatus mounted therein, and plays the acquired stream data . The broadcast reception apparatus includes: a transmission terminal; a clock generation unit operable to generate a transmission reference clock signal having a predetermined frequency; and a receive/transmit unit operable to continuously receive the broadcast signal, and, in synchronization with the transmission reference clock signal, to extract from the broadcast signal and transmit to the playback device via the transmission terminal, the stream data. The playback device includes: a mounting slot capable of mounting the broadcast reception apparatus therein, and including a stream data terminal that corresponds to the transmission terminal; a stream data acquiring unit operable to acquire, via the stream data terminal, stream data transmitted from the broadcast reception apparatus; a clocking unit operable to generate playback reference clock signals having a reference frequency, and to clock a playback reference time by counting the playback reference clock signals; a clock adjustment unit operable to adjust the reference frequency, by referring to a time that the playback reference clock adjustment information included in the stream data was received from the broadcast reception apparatus via the stream data terminal, a content of the playback reference clock adjustment information, and the playback reference time clocked by the clocking unit; and a playback unit operable to play the stream data acquired by the stream data acquiring unit, based on the playback reference time clocked by the clocking unit, at a time shown in the playback time specification information included in the stream data.

According to this structure, since stream data extracted from a broadcast signal is transmitted from a broadcast reception apparatus inserted in a slot of a playback device to the playback device in sync with a clock signal having a constant frequency, it is possible, when information for time control, whose reception timing is also a necessary requisite, is included in the stream data, to detect the information for time control precisely on the playback device side, and as a result, the playback device is able to precisely adjust an internal clock that clocks a playback reference time of the stream data, and to playback the stream data at an appropriate time.

Here, the broadcast reception apparatus may further include a clock output terminal, the clock generation unit may transmit the generated transmission reference clock signal to the playback device via the clock output terminal, the mounting slot may further include a clock input terminal that corresponds to the clock output terminal, and the stream data acquiring unit may receive the transmission reference clock signal via the clock input terminal, and acquire the stream data in synchronization with the transmission reference clock signal.

According to this structure, since the playback device receiving stream data transmitted from the broadcast reception apparatus is able to accurately specify the reception timing of the stream data using a transmission reference clock signal, it is possible to appropriately detect, for example, data in the stream data such as PCRs and the like whose reception timing precision is important, and to playback the stream data at an appropriate time by using the PCRs to adjust the playback reference time clock.

A broadcast reception apparatus relating to the present invention is mountable in a device, is controlled by a command from the device. and operates when mounted in and having power supplied by the device, the broadcast reception apparatus including a receive/transmit unit operable to continuously receive a broadcast signal containing stream data that includes information for playback time adjustment, and, in synchronization with a transmission reference clock signal having a constant frequency, to extract from the broadcast signal and transmit to the device, the stream data.

According to this structure, since stream data extracted from a broadcast signal is transmitted from a broadcast reception apparatus set in a host device to the host device in sync with a clock signal having a constant frequency, it is possible, when information for time control, whose reception timing is also a necessary requisite, is included in the stream data, to detect and use the information for time control precisely on the host device side.

### BRIEF DESCRIPTION OF THE DRAWINGS

These and other objects, advantages and features of the invention will become apparent from the following description thereof taken in conjunction with the accompanying drawings that illustrate specific embodiments of the present invention.

In the drawings:
- Fig.1: shows a functional structure of a conventional broadcast receive/play apparatus;
- Fig.2: shows a profile of a broadcast receive/play system relating to an embodiment 1 of the present invention;
- Fig.3: is a functional block diagram of a broadcast reception card 100 and a host device 200;
- Fig.4: shows an elementary stream (ES) and transport stream (TS) packets;
- Fig.5: shows a relationship between packetized elementary streams (PES) and a TS;
- Fig.6: shows a data structure of TS packets;
- Fig.7: shows an exemplary structure of command and response data transmitted/received between the host device and the broadcast reception card;
- Fig.8: is a timing chart relating to signals transmitted/received between the host device and the broadcast reception card;
- Fig.9: is a timing chart relating to signals transmitted from broadcast reception card 100 to host device 200;
- Fig.10: is a flowchart showing control processing and broadcast reception processing conducted by the broadcast reception card;
- Fig.11: is a flowchart showing stream processing conducted by a stream processing unit 220;
- Fig.12: is a timing chart relating to clock signals (SCK) and data signals (SDATA) transmitted from the broadcast reception card to the host device in a variation of the present invention;
- Fig.13: is a functional block diagram of a broadcast reception card relating to an embodiment 2 of the present invention; and
- Fig.14: is a functional block diagram of a broadcast reception card relating to an embodiment 3 of the present invention.

### DETAILED DESCRIPTION OF THE PREFERRED EMBODIMENTS

### 1.Embodiment 1

The following description relates to a broadcast receive/play system pertaining to an embodiment 1 of the present invention, with reference to the drawings.

### 1-1. Structure

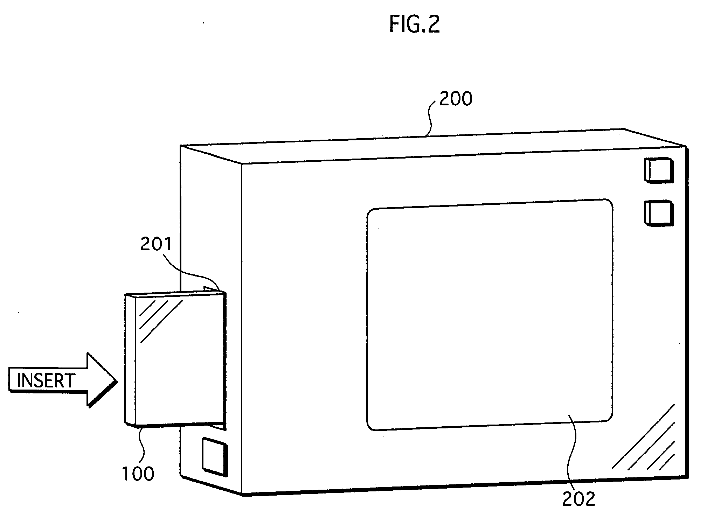

Fig.2 shows a profile of the broadcast receive/play system pertaining to embodiment 1 of the present invention.

A host device 200 includes a display 202 and a PC card slot 201. A broadcast reception card 100 is a PC card-type broadcast reception apparatus having a digital broadcast reception function, and is mountable in devices such as host device 200 and the like that have a PC card slot. The arrow in Fig.2 shows broadcast reception card 100 being mounted in host device 200 by being inserted in PC card slot 201 by a user.

Here, terminals for input/output in broadcast reception card 100 are aligned with corresponding terminals for input/output in host device 200 when broadcast reception card 100 is mounted in host device 200, and transmission/reception of data between the two is conducted via these terminals.

The following description relates to a functional structure of the broadcast receive/play system.

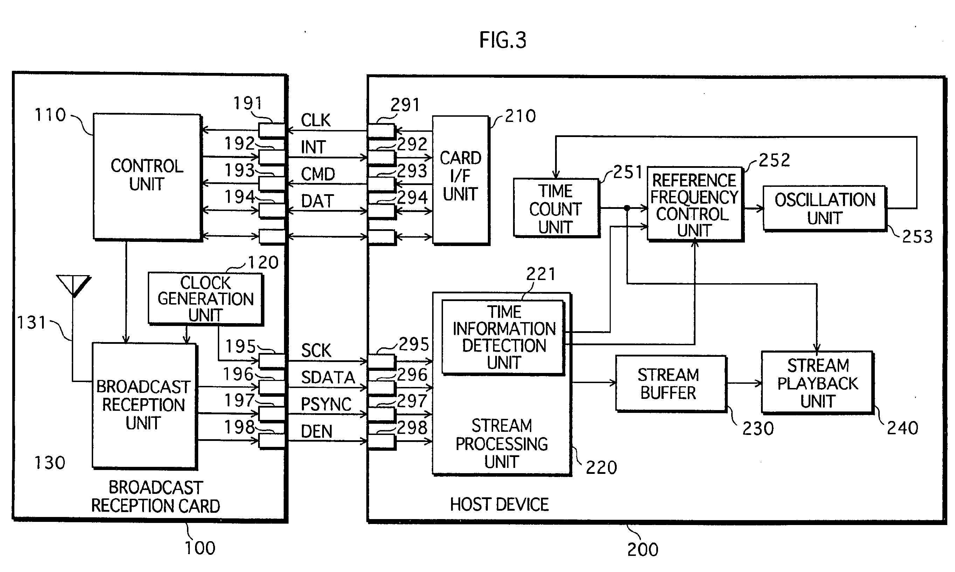

Fig.3 is a functional block diagram of broadcast reception card 100 and host device 200.

Broadcast reception card 100 is an apparatus that receives broadcasts of transport streams ("TS") conforming to the MPEG-2 system standard, and includes a control unit 110, a clock generation unit 120, a broadcast reception unit 130, an antenna 131, and various terminals for input/output. Here, the terminals include a CLK terminal 191, an INT terminal 192, a CMD terminal 193, a DAT terminal 194, a SCK terminal 195, an SDATA terminal 196, a PSYNC terminal 197, a DEN terminal 198 and the like. Moreover, broadcast reception card 100 operates by receiving power supplied from host device 200 via a power source terminal (not depicted).

Control unit 110 receives a clock signal (CLK) from host device 200 via CLK terminal 191, conducts transmission/reception of various kinds of data with host device 200 using a method conforming to standards predetermined as PC card standards and the like, at a timing based on the clock signal, and controls the units in broadcast reception card 100 including broadcast reception unit 130. Here, the transmission/reception data includes interrupt signals (INT), commands (CMD) and other data (DAT), and the commands include commands for enquiring about function IDs identifying card function classifications, and commands pertaining to reception controls that specify reception frequencies and the like.

Clock generation unit 120 generates a clock signal (SCK) having a constant frequency of, for example, 2 MHz or the like, and transmits the clock signal (SCK) to host device 200 via SCK terminal 195, as well as transferring the clock signal to broadcast reception unit 130.

Broadcast reception unit 130 functions, at a timing synchronized with the clock signal (SCK), to sequentially extract TS packets by demodulating a digitally modulated broadcast signal received from a broadcast wave via antenna 131, and to sequentially transmit extracted TS packets to host device 200 via SDATA terminal 196. Here, broadcast reception unit 130 transmits the TS packets with parity data embedded therebetween. Furthermore, broadcast reception unit 130 transmits a synchronization signal (PSYNC) and a data enable signal (DEN) for cutting the TS packets to host device 200 via PSYNC terminal 197 and DEN terminal 198.

Host device 200 is an apparatus that functions to extract playback video, audio and other data forming broadcast program content from transport streams conforming to the MPEG-2 system standard, and includes a card interface (I/F) unit 210, a stream processing unit 220, a stream buffer 230, a stream playback unit 240, a time count unit 251, a reference frequency control unit 252, an oscillator 253, and various terminals for input/output. Here, the terminals include a CLK terminal 291, an INT terminal 292, a CMD terminal 293, a DAT terminal 294, a SCK terminal 295, an SDATA terminal 296, a PSYNC terminal 297, a DEN terminal 298 and the like.

Card I/F unit 210, as a transmission/reception interface with broadcast reception card 100 which is subject to the control of a CPU within host device 200, functions to transfer a clock signal (CLK) having a constant frequency generated within host device 200 to broadcast reception card 100, to transmit commands to broadcast reception card 100 at a timing synchronized with the clock signal (CLK), to also transfer data ancillary to these commands if necessary, and to receive response data corresponding to the commands from broadcast reception card 100. Here, the CPU within host device 200 transmits commands to card I/F unit 210 in response to user operations and so forth received via a user I/F. Here, the CPU within host device 200 conducts various control operations by executing a control computer program stored in a memory within host device 200.

Stream processing unit 220 includes a time information detection unit 221 that extracts PCRs from TS packets, and functions to sequentially receive a clock signal (SCK), data that includes TS packets, a PSYNC signal and a DEN signal transmitted from broadcast reception card 100 respectively via SCK terminal 295, SDATA terminal 296, PSYNC terminal 297 and DEN terminal 298, to refer to the PSYNC signal and the DEN signal and extract the TS packets, to conducts header analysis of each TS packet, to integrate a plurality of TS packets into a PES (packetized elementary stream), and to temporarily store the packetized video and audio elementary streams in stream buffer 230. Time information detection unit 221 here functions to conduct header analysis of TS packets, and to convey a PCR detection timing (i.e. a timing detected for the end byte of a PCR, being data of a plurality of bytes) and a PCR value to reference frequency control unit 252. Here, stream processing unit 220 is structured so as to conduct header analysis of TS packets sequentially as soon as they are received from broadcast reception card 100.

Stream buffer 230 includes a memory area, has packetized video and audio elementary streams stored therein by stream processing unit 220, and functions to output these video and audio streams to stream playback unit 240 in response to requests from the stream playback unit.

Stream playback unit 240 functions to decode and playback inputted PESs of video and audio streams at a timing at which a DTS or PTS appended to a PES header matches an STC received from time count unit 251.

Time count unit 251 is a counter for counting an STC, which is a reference time, and functions to conduct counting up in sync with a clock generated by oscillator (VCO: voltage control oscillator) 253 and having a frequency whose reference is 27 MHz, and to output the STC, being a count value, to reference frequency control unit 252 and stream playback unit 240.

Reference frequency control unit 252 receives input of a PCR value detected by time information detection unit 221 and the STC from time count unit 251, and outputs, as a control voltage to oscillator 253 at a timing of the PCR detection conveyed from time information detection unit 221, a signal obtained by applying a low-pass filter after calculating and D/A converting the difference between the PCR and the STC. As a result of this control of oscillator 253, an STC that perfectly matches the system clock on the broadcast side (i.e. the encoder side) is transferred from time count unit 251 to stream playback unit 240, and thus video and audio stream playback at timings intended on the broadcast side is realized.

### 1-2. Data

The following description relates to data handled in the above broadcast receive/play system.

Broadcast data received by the broadcast receive/play system will be described firstly.

A digital broadcast received by the broadcast receive/play system conforms to the MPEG-2 system standard, the DVB-SI (Digital Video Broadcasting - Service Information) standard, and the like.

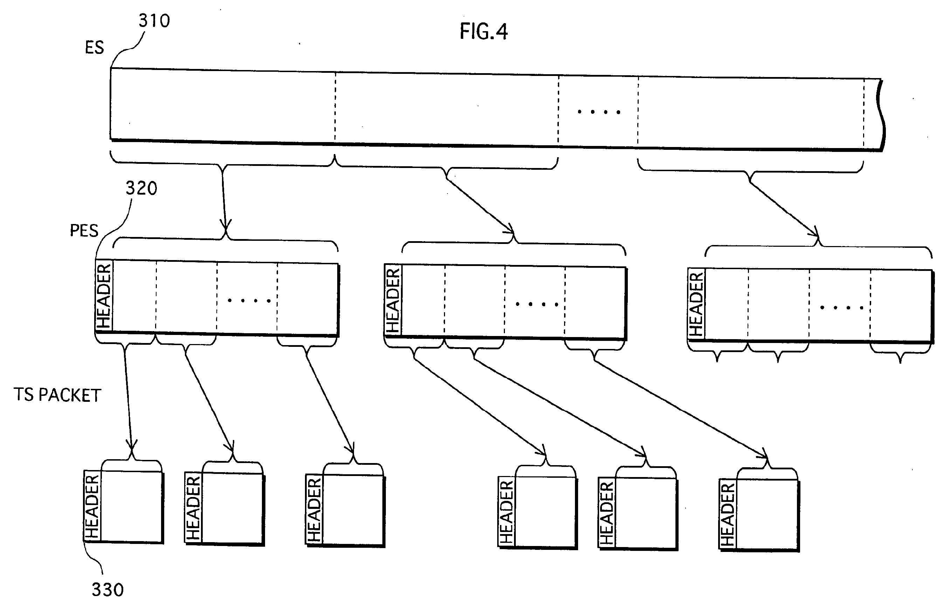

Fig. 4 shows a relationship between an elementary stream (ES) and TS packets.

ES 310 is divided and headers are appended to form PESs 320, and PESs 320 are divided every 184 bytes and a 4-byte header is appended to form 188-byte TS packets 330.

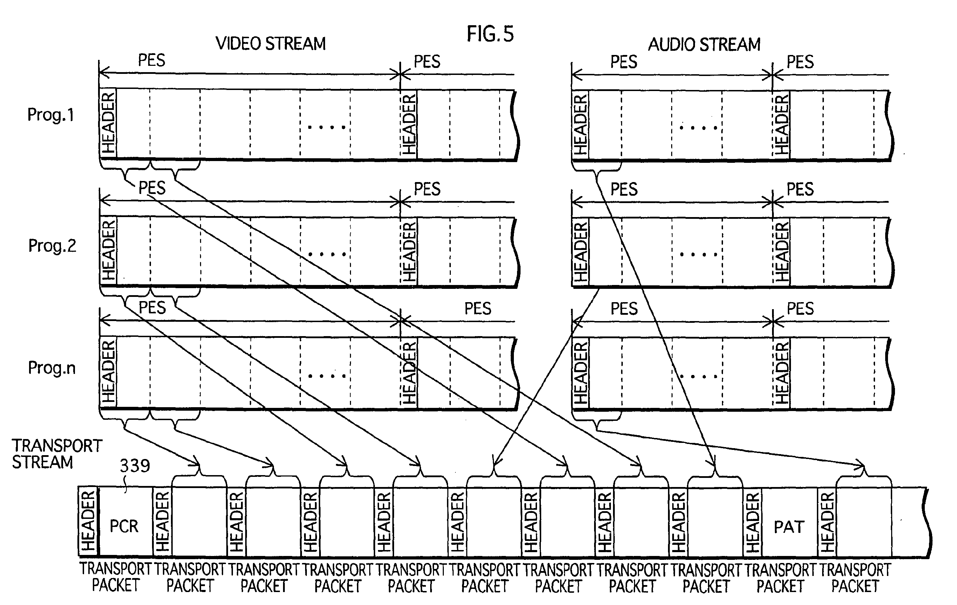

Fig.5 shows a relationship between PESs and a TS.

Normally, a plurality of broadcast programs is broadcast as a single TS. PESs relating to video and audio streams that respectively form the video and audio content of the broadcast programs are time-division multiplexed to structure a TS.

That is, in a broadcast apparatus that broadcasts transport streams conforming to the MPEG-2 system standard, packetized video elementary streams (video PESs) or audio elementary streams (audio PESs) are generated by compression encoding video signals or audio signals to form a video elementary stream (video ES) or an audio elementary stream (audio ES), being data strings of access units (AU), which are independent and decodable units, and packetizing the video or audio ES after appending decoding time information (i.e. a DTS) and display time information (i.e. a PTS) and the like as headers, and a TS is generated by time-division multiplexing the video PESs, audio PESs and other data (e.g. a PCR 339, a program association table or "PAT", a program map table, and the like), the generated TS then being digitally modulated and outputted as a broadcast.

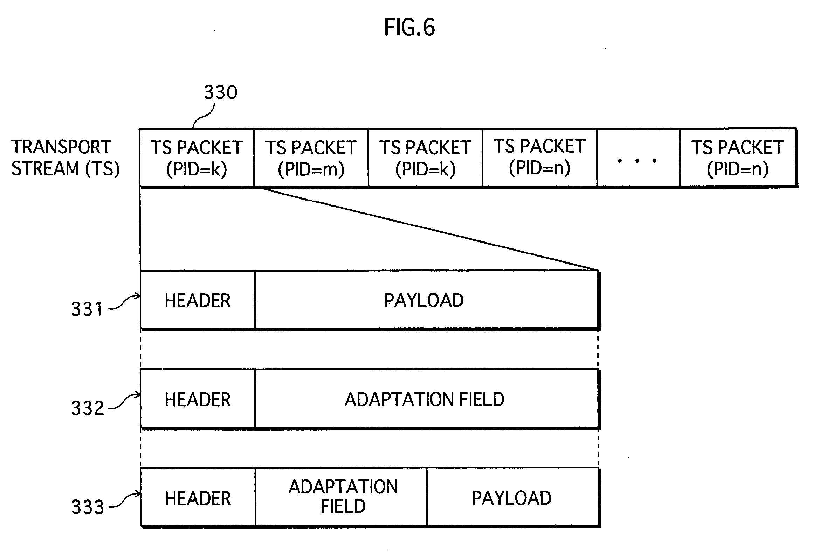

Fig.6 shows a data structure of TS packets.

TS packets 330 each include a packet identifier (PID) identifying an attribute of a stream forming a content of the packet, a flag showing if the packet is constituted by an adaptation field, a payload, or both of these, and is constituted by a format that is one of format patterns 331 to 333. Here, PCRs are disposed within adaptation fields.

Data received/transmitted between host device 200 and broadcast reception card 100 will now be described.

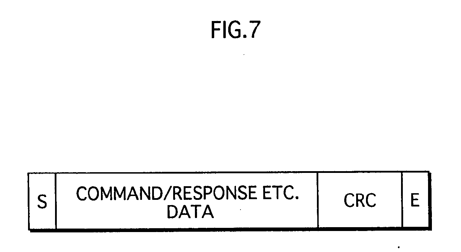

Fig.7 shows an exemplary structure of a command/response data received/transmitted between the host device and the broadcast reception card.

The "S" and "E" in Fig.7 express a start bit and an end bit, respectively. Between the start and end bits is placed a CRC (cyclic redundancy check), and either commands that inquire about a function ID of the card, specify a reception frequency, and the like, or response data and the like that returns a function ID or a state.

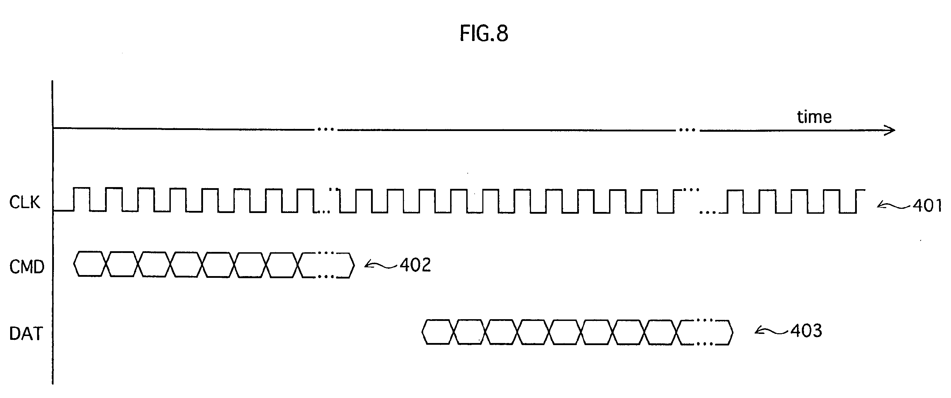

Fig.8 is a timing chart relating to signals received/transmitted between the host device and the broadcast reception card.

In Fig.8 is shown a clock (CLK) signal 401 sent continuously from host device 200 to broadcast reception card 100, a command (CMD) signal 402 sent from host device 200 to broadcast reception card 100 as required, and a data (DAT) signal 403 sent from host device 200 to broadcast reception card 100 in response, for example, to a command.

CMD signal 402 and DAT signal 403 are transmitted/received in sync with CLK signal 401 from host device 200.

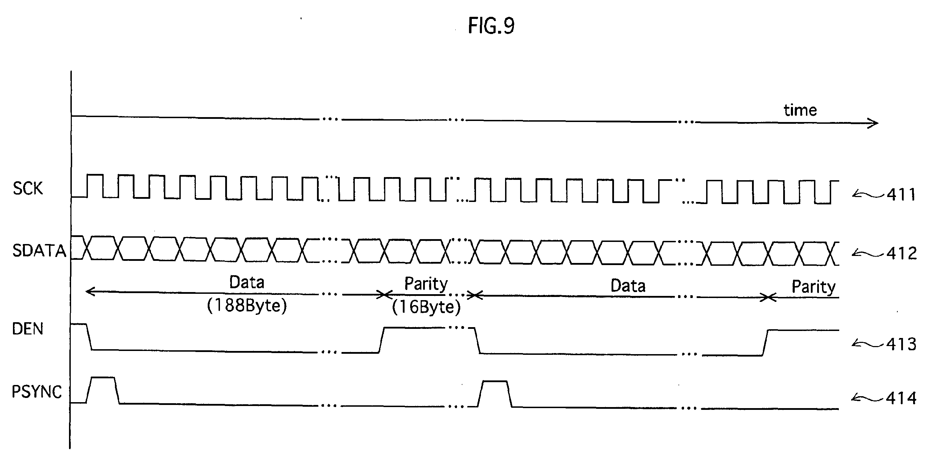

Fig. 9 is a timing chart relating to signals transmitted from broadcast reception card 100 to host device 200.

A data (SDATA) signal 412 that includes TS packets and parity data is transmitted to broadcast reception unit 130 in sync with a clock (SCK) signal 411 continuously generated and outputted by clock generation unit 120 within broadcast reception card 100.

A DEN signal 413 is a signal showing an effective time period of data; that is , it is a signal generated and outputted by broadcast reception unit 130 in order to distinguish between parts of the SDATA signal that are TS packets and parts that are parity data (i.e. parts other than TS packets).

A PSYNC signal 414 is a signal generated and transmitted by broadcast reception unit 130 so as to be active only at timings at which a head of each TS packet is outputted.

### 1-3. Operations

The following description relates to the operations of the broadcast receive/play system structured with broadcast reception card 100 mounted in host device 200.

When broadcast reception card 100 is mounted in host device 200, CLK terminal 191 and CLK terminal 291 are connected, INT terminal 192 and INT terminal 292 are connected, CMD terminal 193 and CMD terminal 293 are connected, DAT terminal 194 and DAT terminal 294 are connected, SCK terminal 195 and SCK terminal 295 are connected, SDATA terminal 196 and SDATA terminal 296 are connected, PSYNC terminal 197 and PSYNC terminal 297 are connected, and DEN terminal 198 and DEN terminal 298 are connected.

Host device 200, with respect to broadcast reception card 100, outputs a clock signal (CLK) having a constant frequency from card I/F unit 210 via CLK terminal 291, transmits via card I/F unit 210 and CMD terminal 293 a command (CMD) outputted to card I/F unit 210 by the CPU in response to, for example, the detection of a broadcast receive/play instruction operation by a user, and receives from DAT terminal 294 and refers to response data (DAT) as required.

For example, the CPU in host device 200, as a result of transmitting a command inquiring about a function classification of a card and receiving response data, displays an error message on display 202 if determined that a PC card not having a broadcast reception function is inserted in PC card slot 201, and when determined from the response data that a card (i.e. broadcast reception card 100) having a broadcast reception function is inserted, transmits commands and the like to the card specifying a desired reception broadcast frequency.

On the other hand, broadcast reception card 100 conducts broadcast reception processing for receiving a digital broadcast, as well as conducting control processing that corresponds to a command (CMD) from host device 200.

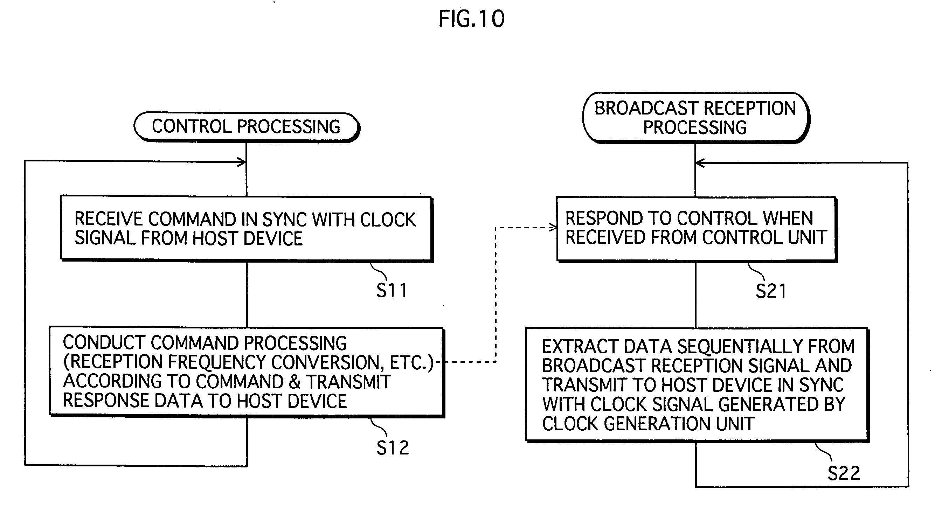

Fig.10 is flowchart showing control processing and broadcast reception processing conducted by the broadcast reception card 100.

Control unit 110 in broadcast reception card 100 continuously receives a clock signal (CLK) from host device 200 via CLK terminal 191, and receives, in sync with the clock signal, a command (CMD) via CMD terminal 193 (step S11).

Next control unit 110 conducts a control responding to the command, and transmits response data (DAT) showing the result of the control to host device 200 via DAT terminal 194 (step S12). Steps S11 and S12 are repeated every time a command is received.

For example, if the command specifies a change to the desired reception broadcast frequency, a control responding to the command will involve changing the reception frequency by controlling broadcast reception unit 130, and outputting, via DAT terminal 194, response data (DAT) showing that the change has been completed, and if, for example, the command is inquiring about a function classification, the control will involve outputting, via DAT terminal 194 as response data (DAT), information, stored in a nonvolatile memory section of the broadcast reception card, that shows the card as having a broadcast reception function. Here, when the occurrence of a predetermined interrupt cause is detected in broadcast reception card 100, control unit 110 transmits an interrupt signal (INT) to host device 200 via INT terminal 192, and host device 200 receives the interrupt signal via INT terminal 292 and conducts predetermined processing in response to the interrupt signal (e.g. display processing to display an error message on a display).

Furthermore, broadcast reception unit 130 in broadcast reception card 100, on receipt of a control from control unit 110, conducts operations responding to the control such as, for example, having an internal tuner receive a broadcast of a specified frequency (step S21), and, in sync with a clock signal generated by clock generation unit 120, sequentially extracts digital data (i.e. TS packets) from a broadcast reception signal obtained via antenna 131, sets parity data between the TS packets, and transmits the extracted TS packets with parity data set therebetween to host device 200 via SDATA terminal 196 (step S22). Here, broadcast reception unit 130 transmits SDATA signal 412, DEN signal 413 and PSYNC signal 414, as shown in Fig.9. Furthermore, the clock signal generated by clock generation unit 120 is transmitted to host device 200 via SCK terminal 195.

Also, TS packet groups (i.e. TSs, SCK clock signals and the like) transmitted as described above are inputted to stream processing unit 220 in host device 200, and stream processing unit 220 conducts the following stream processing on receipt of these TS packet groups.

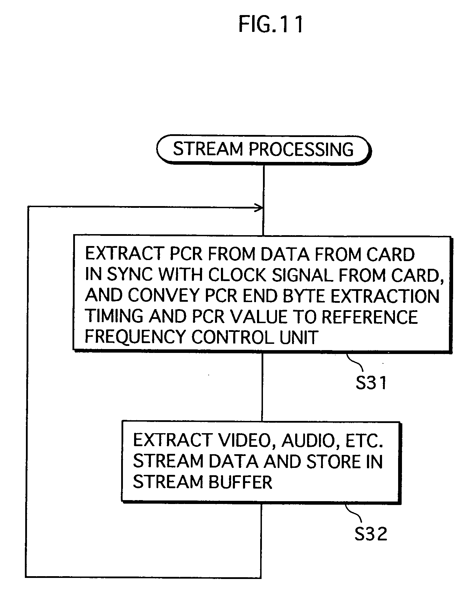

Fig. 11 is a flowchart showing the stream processing conducted by stream processing unit 220.

Stream processing unit 220 continuously receives a clock signal (SCK) from broadcast reception card 100 via SCK terminal 295, receives data (SDATA) such TS packets and the like via SDATA terminal 296 in sync with this clock signal (SCK), detects TS packets within the SDATA by referring to the PSYNC signal received via PSYNC terminal 297 and the DEN signal received via DEN terminal 298, and time information detection unit 221 in stream processing unit 220 detects PCRs from the TS packets, and conveys to reference frequency control unit 252 a point in time at which the end byte of each PCR formed from a plurality of bytes within an adaptation field of a TS packet was received (i.e. timing at which a PCR was detected) and a PCR value obtained by extracting a PCR (step S31).

On receipt of a PCR detection timing and a PCR value, reference frequency control unit 252 conducts a control for adjusting the value of an STC counted by time count unit 251. Here, the method of this control is the same as the prior art.

Also, stream processing unit 220 forms packetized video and audio elementary streams by integrating the received and detected payloads of a plurality of TS packets, and stores the packetized video and audio elementary streams in stream buffer 230 (step S32).

Here, steps S31 and S32 are repeatedly executed.

Stream playback unit 240 acquires video and audio streams stored in stream buffer 230 as a result of step 532, and decodes and plays the acquired video and audio streams at a timing at which the STC matches the DTS or PTS within the PES header, based on a comparison of the STC with the DTS or PTS.

That is, for every AU in a video stream and an audio stream, stream playback unit 240 decodes at a time shown by a DTS and plays at time shown by a PTS, with an STC as the reference time.

### 1-4. Variations

While in the above broadcast reception card 100, clock signals, TS packet groups, and data required in cutting TS packets are transmitted unidirectionally via SCK terminal 195, SDATA terminal 196, PSYNC terminal 197 and DEN terminal 198, the following description relates to a variation in which PSYNC terminal 197 and DEN terminal 198 are omitted.

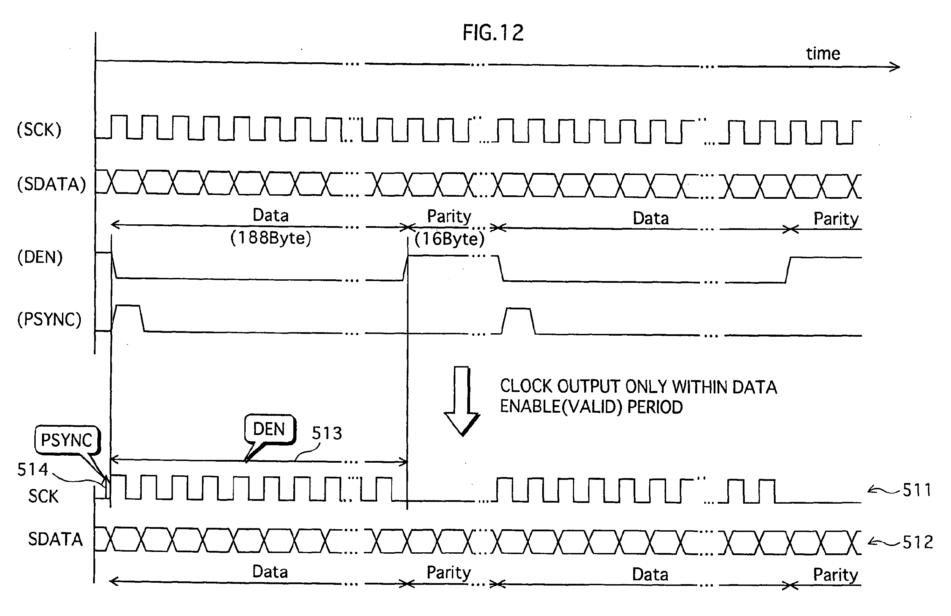

Fig. 12 is a timing chart relating to an SCK signal and a DATA signal transmitted from a broadcast reception card to a host device in this variation.

Here, the timing chart shown in Fig.9 is also included in Fig.12.

With the broadcast reception card in this variation, an output interface is provided, and this output interface refers to signals to be outputted to various terminals from clock generation unit 120 and broadcast reception unit 130, and outputs an SCK signal 511 and an SDATA signal 512 via only an SCK terminal and an SDATA terminal, respectively, as shown in Fig. 12. That is, the output interface unit outputs the SDATA signal in an unaltered state, and outputs as SCK signal 511, a signal that expresses a clock that has a constant frequency only during a time period shown by the SDATA signal, and that continuously expresses a low level at other time periods.

According to this structure, if PSYNC terminal 297 and DEN terminal 298 are also omitted on the host device side, leaving only an SCK terminal and an SDATA terminal in concert with the broadcast reception card, data obtained from a broadcast can be properly acquired. That is, in the stream processing unit of the host device, it is possible to distinguish TS packets within a received SDATA signal, by obtaining and referring to information that equates to PSYNC 514 and DEN 513 (see Fig.12), thus making it possible to conduct storage of packetized video elementary streams in the stream buffer, PCR detection, and the like. More specifically, since a point in time at which the SCK signal switches from a continuous low level to a high level is judged on the host device side to be a start point of a TS packet, and it is judged that a TS packet is being transmitted at time periods other than the time period in which the SCK signal is a continuous low level, TS packets can be distinguished.

### 2. Embodiment 2

The following description relates to a broadcast receive/play system pertaining to an embodiment 2 of the present invention.

The broadcast receive/play system pertaining to embodiment 2 is the same as the broadcast receive/play system shown in embodiment 1, in that it is structured from a host device and a broadcast reception card mountable in the host device. The broadcast receive/play system pertaining to embodiment 2, however, is a system which assumes that protocols relating to transmission/reception of commands and data in sync with clock signals from the host device are different between the host device and the broadcast reception card.

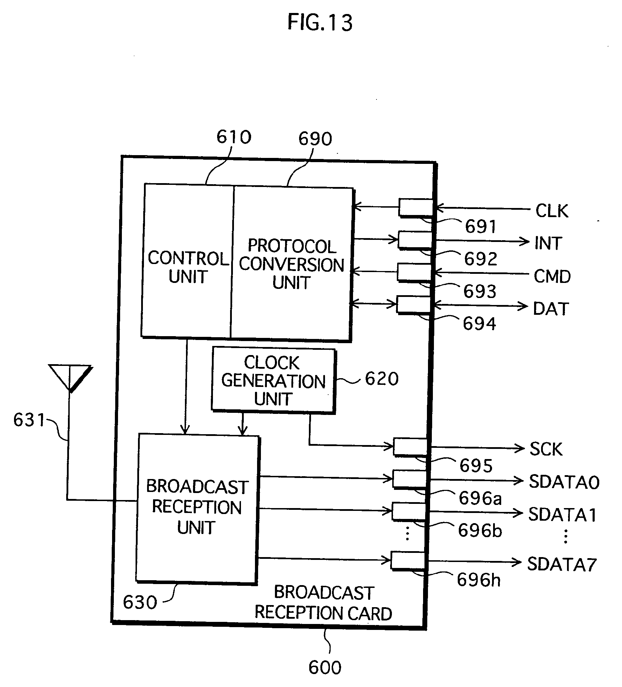

Fig.13 is a functional block diagram of the broadcast reception card pertaining to embodiment 2.

Broadcast reception card 600 is an apparatus that receives broadcasts of transport streams conforming to the MPEG-2 system standard, and includes a control unit 610, a clock generation unit 620, a broadcast reception unit 630, and various terminals for input/output. Here, the terminals include a CLK terminal 691, an INT terminal 692, a CMD terminal 693, a DAT terminal 694, an SCK terminal 695, an SDATA0 terminal 696a, an SDATA1 terminal 696b, ..., an SDATA7 terminal 696h, and the like.

Moreover, broadcast reception card 600 has basically the same functions as broadcast reception card 100 shown in embodiment 1. That is, control unit 610, clock generation unit 620, and broadcast reception unit 630 have functions equating to those of control unit 110, clock generation unit 120, and broadcast reception unit 130.

Here, the following description places emphasis on the characteristics of broadcast reception card 600.

A protocol conversion unit 690 functions, when there is a difference in transmission/reception processing between control unit 610 and the host device, to absorb this difference.

The frequency of a clock signal generated by clock generation unit 620 is lower than the frequency of the clock signal generated by clock generation unit 120, and is for example 1/8 of the clock signal generated by unit 120.

While broadcast reception unit 630, the same as broadcast reception unit 130 shown in embodiment 1, sequentially extracts TS packet groups from a broadcast signal and outputs the TS packet groups and other data in sync with the clock signal generated by the clock generation unit, unit 630 extracts 8-bit (= 1 byte) data from the broadcast signal per clock conveyed from clock generation unit 620, and transmits the bits via SDATA terminals 696a to 696h.

As a result, a total of 1 byte of data, such as TS packet groups or the like, is transmitted to the host device from terminals SDATA0 to SDATA7 per clock, with respect to the clock (SCK) signal outputted from SCK terminal 695.

Consequently, the host device receives TS packet data transmitted from terminals SDATA0 to SDATA7 in sync with the clock signal transmitted from the SCK terminal, and then, as shown in embodiment 1, conducts PCR detection, STC adjustment, and decoding and playback at timings shown by a DTS or PTS in video and audio streams.

### 3. Embodiment 3

The following description relates to a broadcast receive/play system pertaining to an embodiment 3 of the present invention.

The broadcast receive/play system pertaining to embodiment 3 is the same as the broadcast receive/play system shown in embodiment 1, in that it is structured from a host device and a broadcast reception card mountable in the host device. The host device in the broadcast receive/play system pertaining to embodiment 3, however, is a portable information terminal that includes an SD card slot, and the broadcast reception card is an SDIO card.

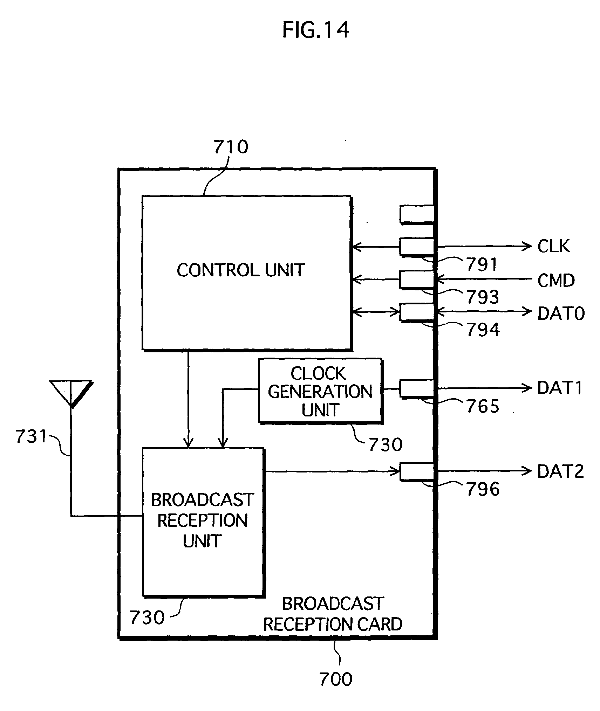

Fig.14 is a functional block diagram of the broadcast reception card pertaining to embodiment 3.

Broadcast reception card 700 is an SDIO card, being an apparatus that receives broadcasts of transport streams conforming to the MPEG-2 system standard, and includes a control unit 710, a clock generation unit 720, a broadcast reception unit 730, and various terminals for input/output. Here, the terminals include a CLK terminal 791, a CMD terminal 793, a DAT0 terminal 794, a DAT1 terminal 795, a DAT2 terminal 796, and the like.

Moreover, broadcast reception card 700 has basically the same functions as broadcast reception card 100 shown in embodiment 1. That is, clock generation unit 720, broadcast reception unit 730, and control unit 710 have functions equating to those of clock generation unit 120, broadcast reception unit 130, and parts of control unit 110 excluding those pertaining to the INT terminal.

Here, the following description places emphasis on the characteristics of broadcast reception card 700.

Control unit 710, in sync with a clock signal (CLK) generated by the host device and received via CLK terminal 791, receives commands via CMD terminal 793 and transmits or receives data responding to the command and other data via DAT0 terminal 794. For example, with respect to a command inquiring about the function classification of the card, control unit 710 returns response data showing the card as having a broadcast reception function. That is, transmission/reception of data via DAT0 terminal 794 is conducted in sync with a clock signal sent from the host device via CLK terminal 791.

Clock generation unit 720 transmits a generated clock signal to the host device via DAT1 terminal 795.

Broadcast reception unit 730, the same as broadcast reception unit 130 shown in embodiment 1, sequentially extracts TS packet groups from a broadcast signal and transmits the TS packet groups and other data to the host device via DAT2 terminal 796, in sync with a clock signal generated by clock generation unit 720.

The host device mounting this broadcast reception card provides a clock signal (CLK) having a constant frequency to CLK terminal 791, provides a command (CMD) inquiring about the function classification of the card, a command (CMD) specifying a desired reception broadcast frequency, and the like to CMD terminal 793, and conducts general controls of a SDIO card by providing data (DAT0) required for card control to DAT0 terminal 794 or by receiving data (DAT0) from the card from DAT0 terminal 794.

Furthermore, when judged that mounted broadcast reception card 700 is a card having a broadcast reception function, the host device, as a result of response data responding to a command, receives a clock signal from DAT1 terminal 795 and stream data that includes TS packets from DAT2 terminal 796, after which the host device conducts PCR detection, STC adjustment, and decoding/playback of video and audio streams at timings shown by a DTS or a PTS. Moreover, the host device, in the event of mounting an SDIO card other than broadcast reception card 700, uses the DAT1 terminal and DAT2 terminal of the mounted SDIO as routes for data transmission/reception in sync with clocks from the host device side as required.

### 4. Further Variations

While a broadcast receive/play system and a broadcast reception apparatus pertaining to the present invention are described above based on embodiments 1 to 3, the present invention is, of course, not limited to these embodiments. The following description relates to variations of the embodiments.
(1) Although a broadcast reception card shown in the above embodiments receives broadcast waves via an internal or external antenna, it may receives broadcast waves via a cable.
(2) Although in the above embodiments video streams, audio streams, and the like forming reception targets of a broadcast reception card are multiplexed and broadcast as transport streams conforming to the MPEG-2 system standard, they may be broadcast as program streams (PS) conforming to the same standard, and in this case, the broadcast reception card, in sync with a clock generated internally, sequentially transmits a PS to the host device via a dedicated terminal such as an SDATA terminal or the like together with the clock signal, and on the host device side, SCRs (system clock references), rather than PCRs, are detected from pack headers within the PS, and used in the STC adjustment. Moreover, even when the broadcast does not conform to the MPEG-2 system standard, the broadcast reception card is useful because it transmits a broadcast signal to the host device via a dedicated line based on an internal clock having a constant frequency, in the case of adjustment data being included in a signal broadcast with the object of adjusting, on the broadcast side, a clock in a host device that functions to playback video data and the like included in the broadcasted signal.
(3) Although a broadcast reception card (i.e. broadcast reception apparatus) shown in the above embodiments has a shape that allows it to be mounted in a PC card slot or SD card slot of a host device, this being serviceable in terms of being able to use a conventional interface, a broadcast reception apparatus, if mountable in a host device, may be other shapes such as, for example, a stick shape or the like. A mountable broadcast reception apparatus is not a dedicated apparatus for use in one particular host device, and can be mounted and used in other host devices, and, in terms of shape, the interface part in a host device for mounting the broadcast reception apparatus can also be used for mounting apparatuses other than the broadcast reception apparatus, such as a memory card, for example.
   Moreover, although the functional operations of an ancillary apparatus mountable in a host device are controlled by stipulating mutual interfaces, so that commands, response data, control data and the like are transmitted/received in accordance with a regular protocol, if a broadcast reception apparatus pertaining to the present invention has an interface other than this, that transmits data obtained by receiving a broadcast to a host device unidirectionally, the terminals that form the physical interfaces in the broadcast reception apparatus and the host device are not limited only to contacting physically, and transmission may, for example, be conducted between the terminals using optical communication.
(4) Lines for a broadcast reception card to transmit TS packets to a host device are not limited to a single line or 8 lines, and may be 4 lines or any number of lines . Moreover, lines for transmitting a single clock may be provided for every line that transmits TS packets.
   Furthermore, in the above embodiments a broadcast reception card transmits a clock signal in parallel with a TS packet group to a host device via an SCK terminal, and according to this structure it is possible to detect PCRs to reflect the PCR reception timings precisely on the host device side, even when there are slight variations in the data transmission delays from instant to instant between the broadcast reception card and the host device, and thus STC adjustment can be conducted precisely. However, it is possible to omit the line on which the broadcast reception card transmits the clock signal to the host device, and have the broadcast reception card not output a clock signal, and in this case the digital data (i.e. TS packets etc.) obtained sequentially from a broadcast signal based on a clock having a constant frequency may be transmitted in an unaltered state to the host device via a dedicated line. In this case, the host device, using an internal clock, receives TS packets sent sequentially from the broadcast reception card, and conducts TS packet content identification, PCR detection and the like.
(5) In the above embodiments, a broadcast reception card is described as operating upon receiving supply of power from a host device. While this is effective in terms of reducing the size of broadcast reception cards, it is not absolutely necessary to receive power supply from a host device, and the broadcast reception card may operate by obtaining power from an external power source, an internalized battery, or the like.
(6) Although in embodiment 1 transmission of commands from a host device to a broadcast reception card is performed via a CMD terminal, and a DAT terminal is used for both transmission of data to a host device and reception of data from a host device, transmission of commands from the host device to the broadcast reception card, and transmission of response data from the broadcast reception card to the host device may be conducted via a single terminal in the broadcast reception card.
(7) Although a broadcast reception unit of a broadcast reception card is described above as transmitting TS packets after embedding parity data between the TS packets, this parity data may be data whose value has no particular significance (i.e. padding data for filling up the time period between TS packets).

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A broadcast reception apparatus that is mountable in a device and operates when mounted in and having power supplied by the device, comprising:
a transmission terminal;
a clock generation unit operable to generate a transmission reference clock signal having a predetermined frequency; and
a receive/transmit unit operable to continuously receive a broadcast signal containing stream data that includes information for playback time adjustment, and, in synchronization with the transmission reference clock signal, to extract from the broadcast signal and transmit to the device via the transmission terminal, the stream data.

2. The broadcast reception apparatus of claim 1, further comprising:
a clock output terminal, wherein
the clock generation unit transmits the generated transmission reference clock signal to the device via the clock output terminal.

3. The broadcast reception apparatus of claim 2, further comprising:
one or a plurality of communication terminals; and
a communication unit operable to sequentially receive, from the device via one or more of the communication terminals, one or more pieces of control data that includes control data relating to a broadcast signal selection, and to transmit response data that responds to the received control data to the device via one or more of the communication terminals,
wherein
the broadcast signal received by the receive/transmit unit is selected according to one of the pieces of control data received by the communication unit.

4. The broadcast reception apparatus of claim 3, further comprising:
a control clock reception terminal, wherein
the communication unit receives a control clock signal continuously from the device via the control clock reception terminal, and conducts the reception of control data and the transmission of response data in synchronization with the control clock signal.

5. The broadcast reception apparatus of claim 4, wherein
the receive/transmit unit receives the broadcast signal via an antenna,
the stream data is a transport stream, and
the information for playback time adjustment is a program clock reference.

6. The broadcast reception apparatus of claim 2, further comprising:
a control clock reception terminal;
a communication terminal; and
a communication unit operable to receive a control clock signal continuously from the device via the control clock reception terminal, and to sequentially receive, from the device via the communication terminal in synchronization with the control clock signal, one or more pieces of control data that includes control data relating to a broadcast signal selection, wherein
the broadcast signal received by the receive/transmit unit is selected according to one of the pieces of control data received by the communication unit.

7. The broadcast reception apparatus of claim 6, further comprising:
an interrupt signal notification terminal; and
an interrupt notification unit operable to detect an occurrence of a predetermined interrupt cause, and, when the occurrence is detected, to notify an interrupt signal to the device via the interrupt signal notification terminal.

8. The broadcast reception apparatus of claim 2, having a configuration enabling the broadcast reception apparatus to be mounted in a PC card slot that is included in the device and conforms to a PC card standard.

9. The broadcast reception apparatus of claim 2, having a configuration enabling the broadcast reception apparatus to be mounted in an SD card slot that is included in the device and conforms to an SDIO standard.

10. A broadcast receive/play system comprising a broadcast reception apparatus that receives a broadcast signal containing stream data which includes playback reference clock adjustment information and playback time specification information, and a playback device that acquires stream data from the broadcast reception apparatus mounted therein, and plays the acquired stream data, the broadcast reception apparatus including:
a transmission terminal;
a clock generation unit operable to generate a transmission reference clock signal having a predetermined frequency; and
a receive/transmit unit operable to continuously receive the broadcast signal, and, in synchronization with the transmission reference clock signal, to extract from the broadcast signal and transmit to the playback device via the transmission terminal, the stream data, and
the playback device including:
a mounting slot capable of mounting the broadcast reception apparatus therein, and including a stream data terminal that corresponds to the transmission terminal;
a stream data acquiring unit operable to acquire, via the stream data terminal, stream data transmitted from the broadcast reception apparatus;
a clocking unit operable to generate playback reference clock signals having a reference frequency, and to clock a playback reference time by counting the playback reference clock signals;
a clock adjustment unit operable to adjust the reference frequency, by referring to a time that the playback reference clock adjustment information included in the stream data was received from the broadcast reception apparatus via the stream data terminal, a content of the playback reference clock adjustment information, and the playback reference time clocked by the clocking unit; and
a playback unit operable to play the stream data acquired by the stream data acquiring unit, based on the playback reference time clocked by the clocking unit, at a time shown in the playback time specification information included in the stream data.

11. The broadcast receive/play system of claim 10, wherein
the broadcast reception apparatus further includes a clock output terminal,
the clock generation unit transmits the generated transmission reference clock signal to the playback device via the clock output terminal,
the mounting slot further includes a clock input terminal that corresponds to the clock output terminal, and
the stream data acquiring unit receives the transmission reference clock signal via the clock input terminal, and acquires the stream data in synchronization with the transmission reference clock signal.

12. The broadcast receive/play system of claim 11, wherein the broadcast reception apparatus further includes:
a control clock reception terminal;
one or a plurality of communication terminals; and
a communication unit operable to receive a control clock signal continuously via the control clock reception terminal, to sequentially receive, from the playback device via one or more of the communication terminals, one or more pieces of control data that includes control data relating to a broadcast signal selection, and, in synchronization with the control clock signal, to transmit response data that responds to the received control data to the playback device via one or more of the communication terminals,
the mounting slot further includes a control clock supply terminal corresponding to the control clock reception terminal, and a control terminal corresponding to the communication terminal, and
the playback device further includes:
a power supply unit operable to supply, to the broadcast reception apparatus, power for driving the broadcast reception apparatus mounted in the mounting slot; and
a device control unit operable to continuously supply a control clock signal having a constant frequency to the reception broadcast device via the control clock supply terminal, to sequentially transmit one or more pieces of control data to the broadcast reception apparatus via the control terminal in synchronization with the control clock signal, and to receive response data from the broadcast reception apparatus via the control terminal in synchronization with the control clock signal.

13. A broadcast reception apparatus that is mountable in a device, is controlled by a command from the device and operates when mounted in and having power supplied by the device, comprising:
a receive/transmit unit operable to continuously receive a broadcast signal containing stream data that includes information for playback time adjustment, and, in synchronization with a transmission reference clock signal having a constant frequency, to extract from the broadcast signal and transmit to the device, the stream data.
